# DEMANDE DE BREVET EUROPEEN

(11) **EP 0 769 406 A1**
(43) Date de publication de la demande: **23.04.1997**
(21) Numéro de dépôt: 96402162.0
(22) Date de dépôt: 11.10.1996
(51) Int. Cl.: B60K 37/02

(54) **Poste de conduite pour véhicule routier**

(30) Priorité: 18.10.1995 FR 9512213
(71) Demandeur: REGIE NATIONALE DES USINES RENAULT S.A., 92109 Boulogne Billancourt (FR)
(72) Inventeur: Rykaert, Jean-Jacques, 93250 Villemomble (FR)

(57) **Abrégé**

Poste de conduite de véhicule routier du type regroupant sous une même planche de bord (2) s'étendant sensiblement sur toute la largeur du véhicule, un tableau de bord (4), une console centrale (7) munie de moyens de commande (12), au moins un vide-poches (9) et/ou une boîte à gants (11) et un système d'information routière et de guidage (6), caractérisé en ce que ledit système (6) est disposé au-dessus de la console centrale (7) et à côté du tableau de bord (4) et en ce que la planche de bord (2) présente une coiffe unique (3) protégeant à la fois le tableau de bord (4) et ledit système (6) des rayons du soleil.

## Description

La présente invention se rapporte à un poste de conduite pour véhicule routier. Plus précisément, elle a pour objet un poste de conduite du type regroupant sous une même planche de bord s'étendant sensiblement sur toute la largeur du véhicule, un tableau de bord, une console centrale munie de moyens de commande, au moins un vide-poches et/ou une boîte à gants, et un système d'information routière et de guidage.

Les systèmes d'information routière et de guidage proposés actuellement aux conducteurs routiers comportent au moins une unité centrale de réception et de traitement associée à un écran d'affichage et à un levier de commande.

Le plus souvent, l'unité centrale exploite d'une part des informations fournies par des capteurs embarqués sur le véhicule et reçus par voie hertzienne, et d'autre part des informations complémentaires, liées notamment au réseau routier ou à son infrastructure, stockées sur un support de données numériques, tel qu'un disque laser. Dans ce cas, le système est complété par un organe de lecture permettant au conducteur d'utiliser sans difficulté différents supports de données, adaptés à ses besoins et à ses itinéraires.

Pour une bonne exploitation d'un système d'information routière et de guidage, il est souhaitable que celui-ci soit accessible au conducteur et au passager avant du véhicule. A cet effet, il a déjà été proposé d'intégrer un tel système dans la console centrale du poste de conduite, séparant les deux places avant. Cette disposition présente l'avantage de placer le conducteur et le passager exactement dans les mêmes conditions d'accès aux organes de commande et d'affichage. Cependant, l'écran et les commandes sont alors placés trop bas pour que le conducteur puisse consulter facilement le système en roulant.

Une autre solution au problème d'implantation évoqué ci-dessus, consiste à rapporter les organes d'affichage et de commande sur le dessus de la planche de bord. Ce type de montage permet de rapprocher l'écran d'affichage du champ de vision habituel du conducteur. Outre les problèmes de reflet des appareils sur le pare-brise, constatés de jour comme de nuit, il faut toutefois admettre que la lisibilité des informations affichées sur l'écran devient médiocre dès que le temps est ensoleillé. Par ailleurs, les températures élevées régnant par fort ensoleillement entre le pare-brise et le dessus de la planche de bord conduisent le plus souvent à une dégradation rapide du matériel.

La présente invention vise à optimiser exploitation d'un système d'information routière et de guidage par les usagers d'un véhicule routier.

Elle propose un poste de conduite de véhicule routier du type regroupant sous une même planche de bord s'étendant sensiblement sur toute la largeur du véhicule, un tableau de bord, une console centrale munie de moyens de commande, au moins un vide-poches et/ou une boîte à gants, et un système d'information routière et de guidage. Ce dispositif est caractérisé en ce que ledit système est disposé au-dessus de la console centrale et à côté du tableau de bord, et en ce que la planche de bord présente une coiffe unique protégeant à la fois le tableau de bord et ledit système, des rayons du soleil.

Conformément à l'invention, le système d'information routière et de guidage peut comporter un lecteur de carte à mémoire.

Dans ce cas, celui-ci sera avantageusement disposé à l'intérieur de la coiffe.

Selon un mode de réalisation préférentiel de l'invention, le lecteur peut basculer entre une première disposition, dans laquelle il est dissimulé à l'intérieur de la coiffe, et une seconde position, dans laquelle il est basculé vers le bas, à l'extérieur de la coiffe.

D'autres caractéristiques et avantages de l'invention apparaîtront clairement à la lecture suivante de la description suivante d'un mode de réalisation particulier de celle-ci, en liaison avec les dessins annexés sur lesquels :
- la figure 1 est une vue d'ensemble d'un poste de conduite conforme à l'invention,
- la figure 2 est un agrandissement partiel de la figure 1, et
- la figure 3 correspond à une coupe verticale de la planche de bord au niveau du système d'information routière et de guidage.

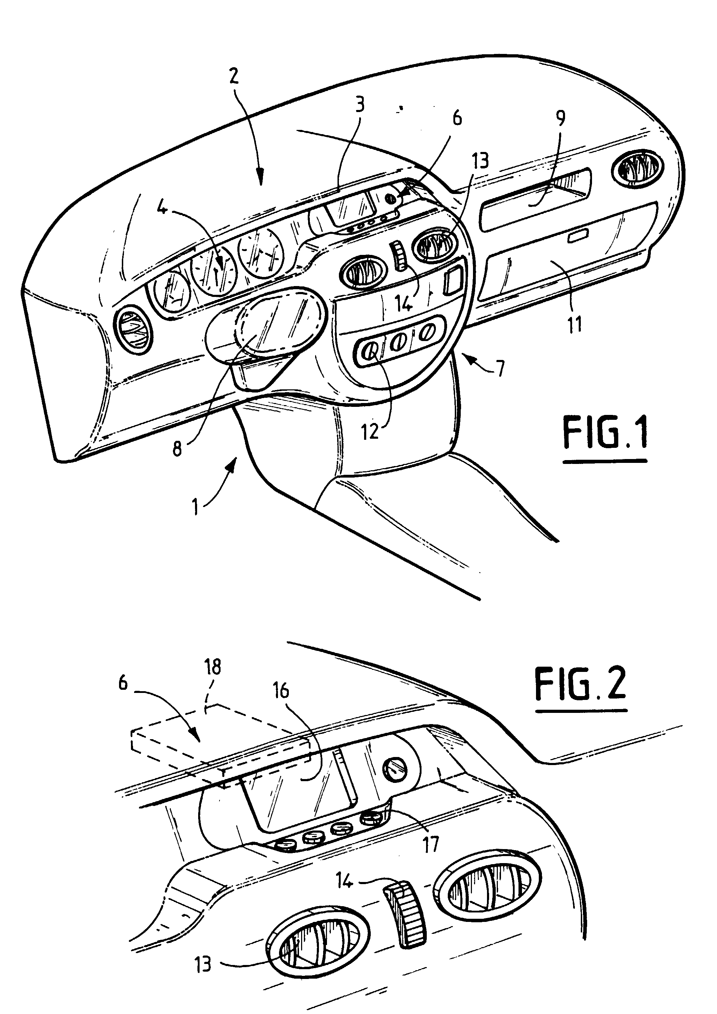

Le poste de conduite 1 illustré par la figure 1 comporte de façon classique une planche de bord 2 s'étendant sur toute la largeur du véhicule, et présentant une coiffe 3, qui s'avance au-dessus du tableau de bord 4 et du système d'information routière et de guidage 6 décrit ci-dessous. Le poste de conduite 1 intègre également une console centrale 7 séparant la colonne de direction 8, du vide-poches 9 et de la boîte à gants 11.

Dans l'exemple de réalisation non limitatif de l'invention illustré par la figure 1, la console 7 regroupe les commandes de climatisation 12 du véhicule, mais on peut bien entendu envisager l'adaptation sur celui-ci de tout autre élément de commande, sans sortir du cadre de l'invention.

L'invention prévoit en premier lieu que le système d'information et/de guidage 6 mentionné ci-dessus, soit disposé sous la coiffe 3, à côté du tableau de bord 4 et au-dessus de la console 7, afin d'être accessible aussi facilement au conducteur qu'au passager avant. Cette disposition permet notamment d'adopter une coiffe unique, protégeant ces rayons du soleil, le tableau de bord 4 et le système 6.

Sur la figure 2, on retrouve le système d'information et de guidage 6 de la figure 1, ainsi que les grilles d'entrée d'air dans l'habitacle 13 et la molette de réglage d'orientation 14 de celles-ci. Ce schéma met en évidence que le système en question 6 comporte un écran d'affichage 16 et un clavier de commande 17, sensiblement horizontal, disposé à la base de celui-ci.

L'écran 16 et le boîtier 17 sont bien entendu associés à une unité centrale de réception et de traitement d'informations routières, et de guidage, n'apparaissant pas sur les schémas. Enfin, la figure 2 mentionne en traits interrompus la présence d'un lecteur 18 de carte à mémoire, disque laser, de disquette ou autre type de support 25 permettant le stockage numérique de données, entièrement dissimulé à l'intérieur de la coiffe 3.

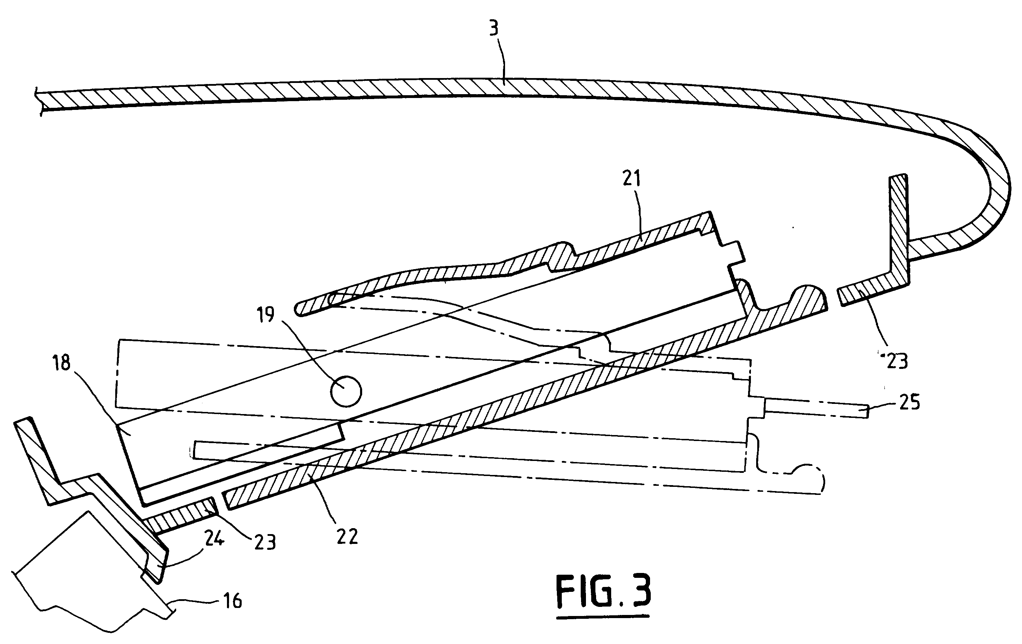

Sur la figure 3, le lecteur 18 apparaît simultanément dans deux positions entre lesquelles il peut pivoter, autour d'un axe horizontal 19 sensiblement parallèle à l'écran 17 et au tableau de bord 6. Comme l'indique le schéma, le lecteur 18 est placé dans un support de lecteur 21, présentant un volet inférieur 22.

Dans la première position du lecteur 18, celui-ci est dissimulé à l'intérieur de la coiffe 3, et le volet 22 est aligné avec un élément de garniture 23 du dessous de la coiffe 3, qui s'étend jusqu'à un élément de façade 24 de la planche de bord 3 rejoignant le haut de l'écran 16. Le lecteur 18 n'est alors visible ni de l'extérieur ni de l'intérieur du véhicule, mais peut cependant être exploité par le système 6 pour assurer l'information et le guidage du conducteur.

Dans sa seconde position, représentée en traits interrompus sur la figure 3, le lecteur 18 est incliné vers le bas sous l'extrémité de la coiffe 3, de sorte que l'utilisateur a la possibilité d'extraire la carte 25.

Comme le suggère la figure 3, l'invention prévoit que le basculement du lecteur 18 dans sa seconde position s'accompagne automatiquement de l'éjection partielle de l'élément de stockage 25 de données, sous l'action de moyens élastiques non représentés, pouvant également faciliter son introduction.

Le basculement du lecteur 18 entre ses deux positions peut par ailleurs être facilité par des moyens d'accompagnement élastiques, également non représentés, permettant à ce dernier de rejoindre automatiquement l'une ou l'autre de ses deux positions, en réponse à une simple impulsion de l'utilisateur sur le volet 22. Bien entendu, on peut toutefois envisager tout autre type de commande motorisée ou non du volet 22 sans sortir du cadre de l'invention.

En conclusion, l'invention permet de réaliser dans les meilleures conditions, l'intégration d'un système d'information routière et de guidage dans le poste de conduite d'un véhicule routier. Les dispositions proposées, satisfaisantes du point de vue ergonomique, tant pour le conducteur du véhicule que pour le passager avant, le sont également d'un point de vue esthétique. La protection de l'écran par la coiffe, assure la lisibilité des informations affichées même dans des conditions de fort ensoleillement. Enfin, l'implantation du boîtier de cartes dans la coiffe de la planche de bord, réduit l'encombrement du système d'information routière et de guidage sur le poste de conduite, et rend la manipulation des cartes à mémoire particulièrement aisée.

## Revendications

1. Poste de conduite de véhicule routier du type regroupant sous une même planche de bord (2) s'étendant sensiblement sur toute la largeur du véhicule, un tableau de bord (4), une console centrale (7) munie de moyens de commande (12), au moins un vide-poches (9) et/ou une boîte à gants (11) et un système d'information routière et de guidage (6) comportant un lecteur (18) de cartes à mémoire (25), caractérisé en ce que le lecteur (18) est dissimulé à l'intérieur d'une coiffe unique (3) protégeant à la fois le tableau de bord (4) et le système (6) des rayons du soleil, et en ce qu'il peut basculer entre une première disposition dans laquelle il est dissimulé à l'intérieur de la coiffe (3) et une seconde position dans laquelle il est basculé vers le bas de l'extérieur de celle-ci.

2. Poste de conduite selon la revendication 1, caractérisé en ce que le système d'information et le guidage présente un écran d'affichage (16) et un clavier de commande (17) placé à la base de celui-ci.

3. Poste de conduite selon la revendication 1 ou 2, caractérisé en ce que la seconde position autorise l'introduction et l'éjection d'une carte à mémoire (25).

4. Poste de conduite selon la revendication 1, 2 ou 3, caractérisé en ce que le boîtier (18) est placé dans un support (21) pivotant autour d'un axe horizontal (19) situé à l'intérieur de la coiffe (3).

5. Poste de conduite selon la revendication 4, caractérisé en ce que le support (21) présente un volet inférieur (22) aligné avec un élément de garniture inférieur (23) de la coiffe (3), lorsque le lecteur (18) est dans sa première position.

6. Poste de conduite selon la revendication 5, caractérisé en ce que le lecteur (18) présente des moyens d'accompagnement élastique lui permettant de rejoindre automatiquement l'une ou l'autre de ses deux positions en réponse à une simple impulsion de l'utilisateur sur le volet (22).

7. Poste de conduite selon la revendication 5 ou 6, caractérisé en ce que le volet (22) est motorisé.

8. Poste de conduite selon l'une des revendications précédentes, caractérisé en ce que le basculement du lecteur (18) dans sa seconde position s'accompagne automatiquement de l'éjection partielle de la carte à mémoire (25).
